(19) **Europäisches Patentamt / European Patent Office / Office européen des brevets**

(11) **EP 1 172 631 B1**

(12) **EUROPÄISCHE PATENTSCHRIFT**

(45) Veröffentlichungstag und Bekanntmachung des Hinweises auf die Patenterteilung:
**02.09.2009 Patentblatt 2009/36**

(51) Int Cl.:
**G01C 21/26** (2006.01)

(21) Anmeldenummer: **01115160.2**

(22) Anmeldetag: **22.06.2001**

(54) **Verfahren zur Fahrroutenberechnung in einem Navigationsgerät**

Method for route calculation in a navigation apparatus

Méthode pour calculer une route dans un appareil de navigation

(84) Benannte Vertragsstaaten:
**BE DE FR GB IT NL**

(30) Priorität: **24.06.2000 DE 10030931**

(43) Veröffentlichungstag der Anmeldung:
**16.01.2002 Patentblatt 2002/03**

(73) Patentinhaber: **ROBERT BOSCH GMBH**
**70442 Stuttgart (DE)**

(72) Erfinder:
• **Lau, Stefan**
**31180 Giesen (DE)**
• **Schmidt, Heinrich, Dr.**
**31199 Diekholzen (DE)**
• **Hoffmann, Ralf**
**31137 Hildesheim (DE)**

(56) Entgegenhaltungen:
**EP-A- 0 697 686      DE-A- 4 211 556**
**DE-A- 19 839 378**

• **PATENT ABSTRACTS OF JAPAN vol. 1999, no. 01, 29. Januar 1999 (1999-01-29) & JP 10 281784 A (MATSUSHITA ELECTRIC IND CO LTD), 23. Oktober 1998 (1998-10-23)**

**Beschreibung**

**Technisches Gebiet**

Die Erfindung betrifft ein Verfahren zur Fahrtroutenberechnung in einem Navigationssystem, wobei das zur Verfügung stehende Wegenetz in Streckenabschnitte eingeteilt und in einem Geschwindigkeitsprofil jeder Streckenabschnitt einer Straßenklasse mit einer zugehörigen Straßenklassengeschwindigkeit zugeordnet ist und wobei die Fahrtdauer einer bestimmten Fahrtroute aus den Längen und den Straßenklassengeschwindigkeiten der Streckenabschnitte, aus denen sich die Fahrtroute zusammensetzt, berechnet wird. Ferner betrifft die Erfindung ein Verfahren zur Auswahl eines fahrerspezifischen Parametersatzes in einem Navigationssystem.

**Stand der Technik**

Verfahren der eingangs genannten Art sind in Navigationssystemen, die zunehmend in Kraftfahrzeugen eingesetzt werden, bekannt. Diese Verfahren gehen aus von einer zumeist digital repräsentierten Datenbank über das zur Verfügung stehende Wegenetz, welche auch als "digitale Karte" bezeichnet wird. In dieser digitalen Karte ist das Wegenetz in Streckenabschnitte eingeteilt, wobei jedem Streckenabschnitt bestimmte über diesen Abschnitt konstante Eigenschaften zugeordnet werden. Insbesondere findet dabei in der Regel eine Zuordnung des Streckenabschnittes in eine von mehreren Straßenklassen statt, wobei einer Straßenklasse unter anderem eine bestimmte Straßenklassengeschwindigkeit zugeordnet ist. Bei der Straßenklassengeschwindigkeit handelt es sich um die Richtgeschwindigkeit, mit welcher eine Straße der entsprechenden Straßenklasse im Mittel befahren wird. Die Verknüpfung von Straßenklassengeschwindigkeiten mit Straßenklassen bildet dann ein Geschwindigkeitsprofil für die vorkommenden Straßentypen.

Bei den bekannten Verfahren wird das Geschwindigkeitsprofil aufgrund von standardisierten Richtgeschwindigkeiten erstellt. Dies hat den Nachteil, dass das individuelle Fahrverhalten des Benutzers nicht berücksichtigt wird, was zu unrealistischen Berechnungen der Fahrtdauern für eine Fahrtroute und zu suboptimalen Fahrtroutenvorschlägen führen kann. Diesbezüglich ist es von PC-basierten Routensuchprogrammen bekannt, dass der Benutzer für die Straßenklassen eigene Straßenklassengeschwindigkeiten definieren kann. Hierdurch ist zwar grundsätzlich eine individuelle Anpassung möglich, jedoch ist die Selbsteinschätzung der Benutzer häufig sehr fehlerhaft, so dass sich die Zuverlässigkeit des Berechnungsergebnisses kaum verbessert. Unter Umständen kann es sich sogar verschlechtern.

**Darstellung der Erfindung, Aufgabe, Lösung, Vorteile**

Vor diesem Hintergrund war es Aufgabe der vorliegenden Erfindung, die Zuverlässigkeit der Berechnung der Fahrtdauer von Fahrtrouten sowie die Qualität der Fahrtroutenvorschläge zu verbessern.

Diese Aufgabe wird durch ein Verfahren mit den Merkmalen des Anspruchs 1 sowie ein Verfahren mit den Merkmalen des Anspruchs 7 gelöst. Vorteilhafte Ausgestaltungen sind in den Unteransprüchen angegeben.

Bei dem Verfahren zur Fahrtroutenberechnung in einem Navigationssystem wird demnach in der eingangs erläuterten Weise das zur Verfügung stehende Wegenetz in Streckenabschnitte eingeteilt, wobei in einem Geschwindigkeitsprofil jeder Streckenabschnitt einer bestimmten Straßenklasse mit einer zugehörigen Straßenklassengeschwindigkeit zugeordnet ist. Die Fahrtdauer $T$ einer bestimmten Fahrtroute im Wegenetz wird dann aus den Längen und den jeweiligen Straßenklassengeschwindigkeiten der Streckenabschnitte berechnet, aus welchen sich die Fahrtroute zusammensetzt. Das heißt, dass das Produkt aus Straßenklassengeschwindigkeit $v_i$ und Länge $l_i$ des Streckenabschnittes über alle an der Fahrtroute beteiligten Streckenabschnitte $i$ summiert wird: $T = \sum_i v_i l_i$ . Das Verfahren ist dadurch gekennzeichnet, dass das verwendete Geschwindigkeitsprofil individuell auf einen Fahrer und/oder ein Fahrzeug bezogen empirisch ermittelt wird.

Die Verwendung eines individuell auf einen Fahrer und/oder ein Fahrzeug bezogenen Geschwindigkeitsprofils hat den Vorteil, dass erheblich realistischere Werte für die berechnete Fahrtdauer einer bestimmten Fahrtroute erreicht werden können. Je nach Temperament des Fahrers beziehungsweise dem persönlichem Fahrstil und je nach Fahrzeug werden dieselben Streckenabschnitte mit sehr verschiedenen mittleren Geschwindigkeiten zurückgelegt. Durch die Verwendung eines "persönlichen Geschwindigkeitsprofils" kann solchen Variationen Rechnung getragen werden mit dem Ergebnis, dass eine individuell angepasste und damit verbesserte Berechnung möglich ist. Dabei ist ferner von Bedeutung, dass das persönliche Geschwindigkeitsprofil empirisch ermittelt wird, das heißt durch die Beobachtung des tatsächlichen Fahrverhaltens eines Fahrers. Fehlerhafte Selbsteinschätzungen des Fahrers werden hierdurch ausgeschlossen. Durch die empirische Ermittlung des Geschwindigkeitsprofils ist auch "automatisch" die Berücksichtigung komplexerer Zusammenhänge möglich, zum Beispiel die Tendenz eines bestimmten Fahrers, eine Straße je nach ihrer landschaftlichen Umgebung mit unterschiedlichem Tempo zu befahren.

Grundsätzlich ist es möglich, für die Berechnung eines Fahrtroutenvorschlags ein standardisiertes Geschwindigkeitsprofil mit Richtgeschwindigkeiten zu verwenden und dann nach Ermittlung des Fahrtroutenvorschlags die für die Route benötigte Fahrtdauer mit Hilfe des persönlichen Geschwindigkeitsprofils zu berechnen, was zu einer dem Fahrer angepassten, verbesserten Genauigkeit führt. In diesem Falle hat das persönliche Geschwindigkeitsprofil auf die vom Navigationssystem vorgeschlagene Fahrtroute keinen Einfluss.

Gemäß einer Weiterbildung der Erfindung wird dagegen vom Navigationssystem auch bei der Bestimmung eines Fahrtroutenvorschlags von einem gegebenen Startpunkt zu einem gegebenen Zielpunkt das empirisch ermittelte persönliche Geschwindigkeitsprofil verwendet. Dies kann zur Folge haben, dass ein anderer Fahrtroutenvorschlag gemacht wird als bei der Verwendung eines standardisierten Geschwindigkeitsprofils. So kann die Fahrtroute mit kürzester Fahrtdauer bei Zugrundelegung des standardisierten Geschwindigkeitsprofils eine andere sein als bei Zugrundelegung des persönlichen Geschwindigkeitsprofils. Mit dem persönlichen Geschwindigkeitsprofil lässt sich daher auch die Qualität der Fahrtroutenvorschläge verbessern. Vorzugsweise wird dem Benutzer vom Navigationssystem eine Wahlmöglichkeit bereitgestellt, ob die Berechnung der Fahrtroutenvorschläge auf der Basis eines standardisierten oder des persönlichen Geschwindigkeitsprofils erfolgen soll.

Das empirisch ermittelte persönliche Geschwindigkeitsprofil wird vorzugsweise während des Fahrens aufgebaut und/oder ständig angepasst. Dies hat den Vorteil, dass zur Erstellung des persönlichen Geschwindigkeitsprofils keine besonderen Testfahrten oder dergleichen nötig sind, sondern dass sich das Navigationssystem von selbst während seiner Benutzung an den Fahrer anpasst und aus dessen Fahrverhalten lernt. Zu Beginn der Benutzung des Navigationssystems muss dabei das persönliche Geschwindigkeitsprofil durch die Werte des standardisierten Geschwindigkeitsprofils initialisiert werden, da noch keine empirischen Daten über den Fahrer bereitstehen. Gegebenenfalls kann als Startpunkt auch ein durch den Fahrer selbst eingegebenes Geschwindigkeitsprofil verwendet werden. Diese anfänglichen Geschwindigkeitsprofile werden dann mit zunehmender Nutzung des Systems immer besser an das tatsächliche Fahrverhaltens des Fahrers angepasst.

Die Erzeugung des empirisch ermittelten persönlichen Geschwindigkeitsprofils findet vorzugsweise so statt, dass für einen durchfahrenen Streckenabschnitt einer bestimmten Straßenklasse die Länge $l$ des Streckenabschnittes und die benötigte Fahrtdauer $t$ gemessen werden. Aus diesen beiden Werten lässt sich dann eine Durchschnittsgeschwindigkeit $w$ für den Streckenabschnitt als Quotient aus der Länge und der Fahrtdauer berechnen, $w = l/t$. Sodann kann ein neuer Wert für die der Straßenklasse zugeordnete Straßenklassengeschwindigkeit $v_i'$ aus dem alten Wert der Straßenklassengeschwindigkeit $v_i$ sowie der genannten Durchschnittsgeschwindigkeit $w$ gebildet werden. Dabei können der alte Wert und die neu berechnete Durchschnittsgeschwindigkeit mit einer vorgegebenen Verteilung gewichtet werden: $v_i' = \alpha\, v_i + \beta w$, $\alpha + \beta = 1$. Ein höheres Gewicht $\alpha$ für den alten Wert bedeutet hierbei eine langsamere Anpassung als ein geringeres Gewicht. Vorzugsweise wird das Gewicht $\alpha$ des alten Wertes zu Beginn einer Anpassung des Navigationssystems an einen Fahrer kleiner gewählt, um ein schnelles Lernen zu ermöglichen, während es später erhöht werden kann, um das erlernte Verhalten vor einem schnellen Überschreiben durch untypische Beobachtungen zu schützen. Weiterhin können bei dem Berechnungsverfahren Sicherungsbedingungen dahingehend eingebaut werden, dass eine Aktualisierung der Straßenklassengeschwindigkeit nur dann stattfindet, wenn das Zurücklegen des Streckenabschnittes nicht zu untypisch verlaufen ist. So können zum Beispiel zu stark vom Standardwert abweichende Durchschnittsgeschwindigkeiten als Ausreißer gewertet werden, oder eine Aktualisierung kann unterbleiben, wenn eine Unterbrechung der Fahrt durch einen Zwischenstopp festgestellt wurde.

Bei der Aktualisierung der Straßenklassengeschwindigkeit durch Berechnung eines neuen Wertes $v_i'$ hierfür werden der alte Wert für die Straßenklassengeschwindigkeit $v_i$ und die ermittelte Durchschnittsgeschwindigkeit $w$ des gerade gefahrenen Streckenabschnittes vorzugsweise mit der Länge der Streckenabschnitte gewichtet, die zur Berechnung der jeweiligen Größen herangezogen wurden. Das heißt, dass in einem separaten Speicher abgelegt ist, auf der Basis wie vieler Streckenkilometer der alte Wert der Straßenklassengeschwindigkeit gewonnen wurde. Diese Länge $L$ bildet dann den Gewichtungsfaktor für den alten Wert, während die Länge $l$ der für die Bildung der Durchschnittsgeschwindigkeit betrachteten Strecke das Gewicht für die Durchschnittsgeschwindigkeit bildet: $v_i' = (L\, v_i + l\, w)/(L + l)$.

Wenn der neue Wert der Straßenklassengeschwindigkeit berechnet wurde, wird die Länge $l$ des dabei berücksichtigten Streckenabschnittes zu der Summe $L$ aller Streckenabschnitte hinzugezählt, aus denen die aktuelle Straßenklassengeschwindigkeit gebildet wurde. Dabei kann vorgesehen werden, dass das Gewicht $L$ des alten Wertes der Straßenklassengeschwindigkeit auf ein Maximum begrenzt wird, um nicht nach langen Benutzungszeiträumen des Navigationssystems die Anpassungsfähigkeit aufgrund eines ständig wachsenden Gewichtes $L$ des alten Wertes zu klein werden zu lassen.

Wenn noch kein alter Wert $v_i'$ für die Straßenklassengeschwindigkeit vorhanden ist beziehungsweise wenn der Wert mit einer standardisierten Richtgeschwindigkeit belegt ist, wird diesem vorzugsweise ein gegebenes Gewicht von typischerweise $L = 500$ km zugeordnet.

Das empirisch ermittelte persönliche Geschwindigkeitsprofil wird vorzugsweise auf einem externen Datenträger abgespeichert. Dieser Datenträger, zum Beispiel eine Mikrochipkarte, kann vom Benutzer mitgenommen werden und zum Beispiel in Verbindung mit anderen Navigationssystemen in anderen Fahrzeugen eingesetzt werden. Ebenso ist es denkbar, dass das Navigationssystem eine Schnittstelle aufweist, über welche das persönliche Geschwindigkeitsprofil eines Benutzers an ein anderes Navigationssystem mit einer kompatiblen Schnittstelle übertragen werden kann. Auf diese Weise können die in einem Navigationssystem gewonnenen Daten bei der Benutzung eines anderen Navigationssystems erhalten bleiben.

Die Erfindung betrifft ferner ein Verfahren zur Auswahl eines fahrerspezifischen Parametersatzes in einem Navigationssystem, wobei der Parametersatz vorzugsweise das empirisch ermittelte Geschwindigkeitsprofil für ein Verfahren der oben erläuterten Art enthält. Das Auswahlverfahren ist dadurch gekennzeichnet, dass die Identifizierung des Fahrers automatisch erfolgt. Insbesondere kann die Identifizierung durch eine Gewichtsmessung oder durch eine Spracherkennung erfolgen. Weiterhin kann sie durch eine Übernahme des elektrischen Sitzverstellungsspeichers oder dergleichen vorgenommen werden. Das erfindungsgemäße Auswahlverfahren hat den Vorteil, dass bei der Verwendung eines Navigationssystems durch verschiedene Benutzer jeweils automatisch die dem Benutzer individuell zugeordneten Parametersätze ausgewählt werden. Hierbei kann es sich insbesondere um das empirisch ermittelte persönliche Geschwindigkeitsprofil für ein Verfahren zur Fahrtroutenberechnung der oben erläuterten Art handeln. Die automatische Identifizierung des Fahrers verhindert, dass versehentlich eine Umstellung auf den persönlichen Parametersatz unterbleibt mit der Folge, dass zum Beispiel das Navigationssystem auf der Basis eines unzutreffenden Parametersatzes arbeitet. Des weiteren wird der Benutzungskomfort des Navigationssystems erhöht, da der Benutzer von manuellen Eingaben zur Identifizierung seiner Person entlastet wird. Lediglich bei der ersten Benutzung des Systems muss die automatisch erfasste Größe wie das Gewicht des Fahrers, seine Stimmcharakteristik oder seine persönliche Sitzeinstellung einmal für diesen Benutzer eingerichtet werden.

**Bester Weg zur Ausführung der Erfindung**

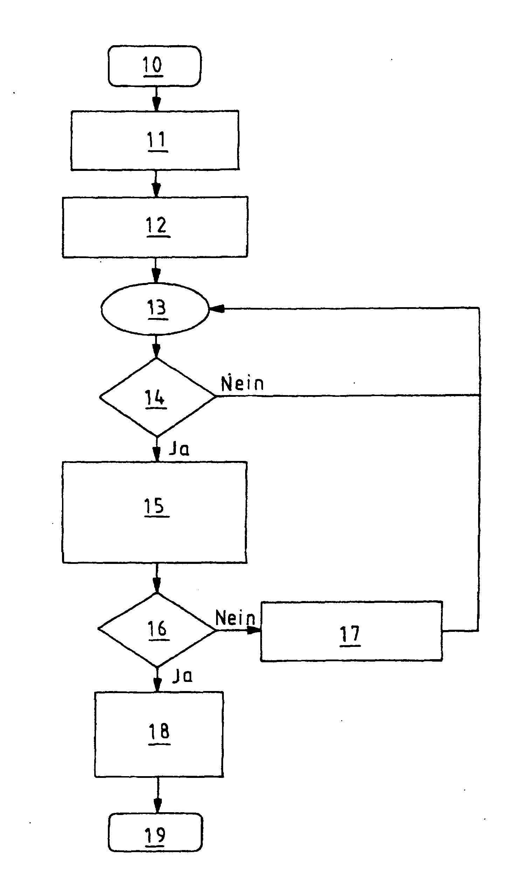

Im folgenden wird die Erfindung mit Hilfe des in der einzigen Figur abgebildeten Flußdiagramms beispielhaft erläutert.

Das Flussdiagramm zeigt den Aufbau eines persönlichen Geschwindigkeitsprofils. Nach dem Start 10 des Navigationssystems erfolgt im Schritt 11 eine Initialisierung und eine Auswahl eines benutzerspezifischen persönlichen Geschwindigkeitsprofils. Dabei muss sich der Fahrer unter einer Kennung anmelden. Optional kann er auch automatisch erkannt werden, zum Beispiel durch eine Gewichtsmessung, Spracherkennung, Übernahme des elektrischen Sitzverstellungsspeichers oder dergleichen. Das persönliche Geschwindigkeitsprofil wird dann unter seiner Benutzerkennung im System gespeichert.

Das persönliche Geschwindigkeitsprofil besteht aus einer Tabelle, in der für jede Straßenklasse die zugehörige mittlere Geschwindigkeit, mit der Straßen dieser Straßenklasse befahren werden, abgelegt ist. Bei der erstmaligen Anmeldung eines Benutzers im Navigationssystem wird das persönliche Geschwindigkeitsprofil mit den für die Fahrtroutenberechnungen benutzten standardisierten Richtwerten gefüllt.

Die Anpassung dieser Werte erfolgt anschließend im Fahrbetrieb dadurch, dass das Navigationssystem bei jedem Wechsel einer Straßenklasse einen Timer startet und den aktuellen Kilometerstand in einen Zwischenspeicher lädt (Schritt 12). Beim nächsten Wechsel der Straßenklasse, welcher in der Warteschleife 13 und der Abfrage 14 erkannt wird, wird aus dem Stand des Timers sowie der Differenz zwischen altem und neuem Kilometerstand die mittlere Geschwindigkeit berechnet, mit der die Strecke zurückgelegt wurde.

Mit diesem Wert wird im Schritt 15 das persönliche Geschwindigkeitsprofil für diese Straßenklasse aktualisiert. Dabei findet vorzugsweise keine Ersetzung des alten dort abgelegten Wertes statt, sondern die neue mittlere Geschwindigkeit wird mit dem alten Wert über einen Gewichtungsfaktor verknüpft, um eine zu starke Schwankung der Ergebnisse aufgrund ungewöhnlich langsam oder schnell zurückgelegter Streckenabschnitte zu vermeiden.

Als Gewichtungsfaktor wird dabei vorzugsweise die Anzahl der gefahrenen Kilometer genutzt. Dies führt zu einem schnellen Lernen kurz nach der Neueinrichtung eines Benutzers und zu einer Stabilisierung des Geschwindigkeitsprofils bei längerer Benutzung des Navigationssystems durch den Benutzer. Dem bei Beginn der Adaptation im Geschwindigkeitsprofil hinterlegten Richtwert wird ein Startgewicht von zum Beispiel 500 km zugeordnet, wobei der genaue Wert basierend auf einem Feldtest oder einer Simulation ermittelt werden kann.

Im Schritt 16 wird abgefragt, ob das Ziel der Fahrt erreicht wurde. Falls nicht, wird im Schritt 17 der Timer neu gestartet und der aktuelle Kilometerstand für eine neue Straßenklasse temporär gespeichert. Sodann wird das oben erläuterte Verfahren für den nächsten Streckenabschnitt im Schritt 13 fortgesetzt.

Falls im Schritt 16 festgestellt wird, dass das Ziel der Fahrt erreicht wurde, wird im Schritt 18 das neue persönliche Geschwindigkeitsprofil unter der Benutzerkennung abgespeichert und das Anpassungsverfahren im Schritt 19 beendet.

Die Anwendung der so gewonnenen Werte des persönlichen Geschwindigkeitsprofils erfolgt erst bei der nächsten Route. Vorzugsweise geschieht dies nur zur Ermittlung der Fahrtdauer beziehungsweise der Ankunftszeit. Die Routensuche selbst basiert dagegen zunächst auf den ab Werk im Navigationssystem vorgegebenen Richtwerten.

Die Berücksichtigung des persönlichen Geschwindigkeitsprofils auch für die Routensuche ist vorzugsweise eine vom Benutzer anwählbare Funktion. Diese optionale Berücksichtigung des persönlichen Geschwindigkeitsprofils kann zum Beispiel durch eine Menüauswahl veranlasst werden, wie sie auch für andere Kriterien möglich ist. Die Verwendung des persönlichen Geschwindigkeitsprofils bei der Routensuche kann unter Umständen dazu führen, dass andere Routen als bei Verwendung eines standardisierten Geschwindigkeitsprofils vorgeschlagen werden, wobei diese dem individuellen Fahrverhalten des Fahrers optimal angepasst sind.

**Patentansprüche**

1. Verfahren zur Fahrtroutenberechnung in einem Navigationssystem, wobei das zur Verfügung stehende Wegenetz in Streckenabschnitte eingeteilt ist und in einem Geschwindigkeitsprofil jeder Streckenabschnitt einer Straßenklasse mit einer zugehörigen Straßenklassengeschwindigkeit zugeordnet ist, und wobei die Fahrtdauer einer Fahrtroute aus den Längen und den Straßenklassengeschwindigkeiten der Streckenabschnitte, aus denen sich die Fahrtroute zusammensetzt, berechnet wird, **dadurch gekennzeichnet, dass** das Geschwindigkeitsprofil individuell auf einen Fahrer und/oder auf ein Fahrzeug bezogen empirisch ermittelt wird.

2. Verfahren nach Anspruch 1, **dadurch gekennzeichnet, dass** das Navigationssystem bei der Bestimmung eines Fahrtroutenvorschlags von einem gegebenen Startpunkt zu einem gegebenen Zielpunkt das empirisch ermittelte Geschwindigkeitsprofil verwendet.

3. Verfahren nach einem der Ansprüche 1 oder 2, **dadurch gekennzeichnet, dass** das empirisch ermittelte Geschwindigkeitsprofil während des Fahrens aufgebaut und/oder angepasst wird.

4. Verfahren nach Anspruch 3, **dadurch gekennzeichnet, dass** die Länge und Fahrtdauer für einen Streckenabschnitt einer bestimmten Straßenklasse gemessen werden, und dass ein neuer Wert für die zugeordnete Straßenklassengeschwindigkeit aus dem alten Wert der Straßenklassengeschwindigkeit sowie der Durchschnittsgeschwindigkeit des Streckenabschnitts gebildet wird, wobei die Durchschnittsgeschwindigkeit aus der gemessenen Länge und Fahrtdauer des Streckenabschnitts berechnet wird.

5. Verfahren nach Anspruch 4, **dadurch gekennzeichnet, dass** der alte Wert der Straßenklassengeschwindigkeit und die Durchschnittsgeschwindigkeit des Streckenabschnitts bei der Berechnung des neuen Wertes der Straßenklassengeschwindigkeit mit der Länge der Streckenabschnitte gewichtet werden, auf denen diese Werte jeweils basieren.

6. Verfahren nach mindestens einem der Ansprüche 1 bis 5, **dadurch gekennzeichnet, dass** das empirisch ermittelte Geschwindigkeitsprofil auf einem externen Datenträger gespeichert wird.

7. Verfahren zur Auswahl eines fahrerspezifischen Parametersatzes in einem Navigationssystem, wobei der Parametersatz vorzugsweise das empirisch ermittelte Geschwindigkeitsprofil nach einem der Ansprüche 1 bis 6 enthält, **dadurch gekennzeichnet, dass** die Identifizierung des Fahrers automatisch erfolgt.

8. Verfahren nach Anspruch 7, **dadurch gekennzeichnet, dass** die Identifizierung des Fahrers durch Gewichtsmessung oder Spracherkennung erfolgt.

**Claims**

1. Method for journey route calculation in a navigation system, wherein the available road network is classified into route sections, and in a speed profile each route section is associated with a road class having an associated road class speed, and wherein the journey time for a journey route is calculated from the lengths and the road class speeds of the route sections from which the journey route is compiled, **characterized in that** the speed profile is empirically ascertained individually on the basis of a driver and/or a vehicle.

2. Method according to Claim 1, **characterized in that** the navigation system uses the empirically ascertained speed profile for determining a journey route proposal from a given starting point to a given destination.

3. Method according to one of Claims 1 and 2, **characterized in that** the empirically ascertained speed profile is constructed and/or adjusted during driving.

4. Method according to Claim 3, **characterized in that** the length and journey time are measured for a route section in a particular road class, and **in that** a new value for the associated road class speed is formed from the old value of the road class speed and the average speed of the route section, the average speed being calculated from the measured length and journey time of the route section.

5. Method according to Claim 4,

**characterized in that** the old value of the road class speed and the average speed of the route section are weighted with the length of the route section on which these values are respectively based when calculating the new value of the road class speed.

6. Method according to at least one of Claims 1 to 5, **characterized in that** the empirically ascertained speed profile is stored on an external data storage medium.

7. Method for selecting a driver-specific parameter set in a navigation system, wherein the parameter set preferably contains the empirically ascertained speed profile according to one of Claims 1 to 6, **characterized in that** the driver is identified automatically.

8. Method according to Claim 7, **characterized in that** the driver is identified by weight measurement or voice recognition.

**Revendications**

1. Procédé de calcul d'itinéraire dans un système de navigation, dans lequel le réseau routier disponible est divisé en tronçons de parcours et chaque tronçon de parcours sur une classe de route est associé dans un profil de vitesse à une vitesse associée à la classe de route, la durée de parcours d'un itinéraire étant calculée à partir des distances et des vitesses sur les classes de route des tronçons de parcours qui constituent l'itinéraire,
**caractérisé en ce que**
le profil de vitesse est déterminé empiriquement pour un conducteur particulier et/ou pour un véhicule particulier.

2. Procédé selon la revendication 1, **caractérisé en ce que** pour la détermination d'une proposition d'itinéraire depuis un point de départ donné jusqu'à un point de destination donné, le système de navigation utilise le profil de vitesse déterminé empiriquement.

3. Procédé selon l'une des revendications 1 ou 2, **caractérisé en ce que** le profil de vitesse déterminé empiriquement est établi et/ou adapté pendant le déplacement.

4. Procédé selon la revendication 3, **caractérisé en ce que** la distance et la durée de déplacement sur un tronçon de parcours sur une classe de route définie sont mesurées et **en ce qu'**une nouvelle valeur de la vitesse associée à la classe de route est formée de l'ancienne valeur de la vitesse sur la classe de route ainsi que de la vitesse moyenne sur le tronçon de parcours, la vitesse moyenne étant calculée à partir de la distance et de la durée de déplacement mesurées sur le tronçon de parcours.

5. Procédé selon la revendication 4, **caractérisé en ce que** lors du calcul de la nouvelle valeur de la vitesse sur la classe de route, l'ancienne valeur de la vitesse sur la classe de route et la vitesse moyenne sur le tronçon de parcours sont pondérées par la longueur des tronçons de parcours sur lesquels chacune de ces valeurs est basée.

6. Procédé selon au moins l'une des revendications 1 à 5, **caractérisé en ce que** le profil de vitesse déterminé empiriquement est conservé en mémoire sur un support de données externe.

7. Procédé de sélection d'un jeu de paramètres spécifiques à un conducteur dans un système de navigation, le jeu de paramètres contenant de préférence le profil de vitesse déterminé empiriquement selon l'une des revendications 1 à 6, **caractérisé en ce que** l'identification du conducteur s'effectue automatiquement.

8. Procédé selon la revendication 7, **caractérisé en ce que** l'identification du conducteur s'effectue par mesure de son poids ou par reconnaissance vocale.